# EUROPÄISCHE PATENTSCHRIFT

(11) **EP 3 309 538 B1**
(45) Veröffentlichungstag und Bekanntmachung des Hinweises auf die Patenterteilung: **16.02.2022**
(21) Anmeldenummer: 17194965.4
(22) Anmeldetag: 05.10.2017
(51) Int. Cl.: G01N 15/14, G01N 21/65, G01N 15/10

(54) **OPTISCHES SYSTEM UND VERFAHREN ZUR SPEKTROSKOPIE**
OPTICAL SYSTEM AND METHOD FOR SPECTROSCOPY
SYSTÈME OPTIQUE ET PROCÉDÉ DE SPECTROSCOPIE

(30) Priorität: 05.10.2016 DE 102016118898
(43) Veröffentlichungstag der Anmeldung: 18.04.2018
(73) Patentinhaber: Ferdinand-Braun-Institut gGmbH, Leibniz-Institut für Höchstfrequenztechnik, 12489 Berlin (DE)
(72) Erfinder: Sumpf, Bernd, 15745 Wildau (DE); Maiwald, Martin, 10707 Berlin (DE)
(74) Vertreter: Gulde & Partner

(56) Entgegenhaltungen:
- US-A1- 2008 252 887
- US-A1- 2010 297 759
- US-A1- 2014 093 949
- US-A1- 2014 200 164
- US-A1- 2016 178 439
- Anonymus: "Monochromatisches Licht", Wikipedia, 24. Januar 2018 (2018-01-24), Seiten 1-2, XP055457391, Gefunden im Internet: URL:https://de.wikipedia.org/wiki/Monochro matisches_Licht [gefunden am 2018-03-07]

## Beschreibung

Die Erfindung betrifft ein optisches System und ein Verfahren zur Spektroskopie. Insbesondere betrifft die vorliegende Erfindung ein optisches System sowie ein Verfahren zur Raman-Spektroskopie.

### Technologischer Hintergrund der Erfindung

Die Raman-Spektroskopie wird aufgrund ihrer Eignung zur In-situ- und Online-Analytik zunehmend in der industriellen Prozess- und Umweltmesstechnik eingesetzt. Ein Nachteil hierbei ist jedoch, dass einige Proben in der Praxis infolge Fluoreszenz und/oder aufgrund ihrer Streueigenschaften Spektren liefern, deren Qualität durch einen hohen Untergrund beeinträchtigt wird, insbesondere, wenn mit Messzeiten unterhalb 1 s, ohne Probenvorbereitung und/oder mit kleinbauenden Apparaturen gearbeitet wird.

Typischerweise werden zur Aufnahme von Raman-Spektren ortsfeste Proben verwendet, bei denen sich zur Unterdrückung eines Messuntergrundes die erzeugte Raman-Strahlung über einen ausreichend langen Messzeitraum integrieren lässt. Dabei wird Anregungsstrahlung einer festen Anregungswellenlänge in eine zu untersuchende Probe eingekoppelt und von der Probe inelastisch gestreut. Die gestreute Anregungsstrahlung kann anschließend mittels einer geeigneten Spektroskopie-Anordnung eingesammelt und spektral untersucht werden. In Abhängigkeit von den speziellen Materialeigenschaften einer Probe zeigen sich dabei im aufgenommenen Spektrum einzelne Raman-Linien, welche einen genau bestimmten und für die Art der Probe charakteristischen spektralen Abstand von der Anregungswellenlänge der Anregungsstrahlung aufweisen.

Ein solcher Aufbau eignet sich jedoch meist nicht zur Aufnahme eines Raman-Spektrums einer sich bewegenden Probe, da hierbei sowohl die Anregung der Probe als auch die Detektion einer daran gestreuten Anregungsstrahlung der momentanen Position der Probe nachgeführt werden müssen. Eine kontinuierliche Aufnahme eines vollständigen Raman-Spektrums mit Hilfe eines konventionellen Spektrometers ist dabei aufgrund der typischerweise im Bereich mehrerer 10 Sekunden liegenden Integrations- und Messzeiten oft nur schwer realisierbar. Insbesondere können durch eine Bewegung der Probe die gemessenen Signalintensitäten starken Schwankungen unterworfen sein, so dass sich meist keine validen Aussagen über die Intensitäten einzelner Raman-Linien in Bezug zueinander gewinnen lassen.

Werden die zu untersuchenden Proben hingegen vereinzelt und entlang einer feststehenden Messtrecke bewegt, so können die Anforderungen an einen spektroskopischen Aufbau erheblich reduziert werden. Beispielsweise können bei der Durchflusszytometrie einzelne Probenelemente (z.B. Partikel, Zellen, Viren, Mikrokugeln) gezielt angeregt und auf ihre spezifische Eigenschaft hin untersucht werden. Hierbei werden bisher jedoch vorwiegend Fluoreszenzuntersuchungen durchgeführt, da bei einer konventionellen Durchflusszytometrie die Aufnahme eines Raman-Spektrums aufgrund einer relativ kurzen Beobachtungszeit pro Probenelement meist nicht möglich ist.

US 2016/178439 A1 offenbart Vorrichtungen und Verfahren zur Nutzung der kohärenten Raman-Streuung (CRS), z.B. zur kohärenten Anti-Stokes Raman-Spektroskopie und/oder zur induzierten Raman-Streuung. Insbesondere werden auch auf kohärenter Raman-Streuung basierende Vorrichtungen und Verfahren für die Durchflusszytometrie angegeben. US 2014/200164 A1 behandelt Vorrichtungen und Verfahren zur Detektion von in einem Durchflussbereich räumlich verteilt auftretender Tröpfchen. US 2010/297759 A1 betrifft Systeme und Verfahren zur Sortierung von biologischen Partikeln in einem Flüssigkeitsstrom. US 2014/093949 A1 behandelt Vorrichtungen und Verfahren zur Untersuchung des Anregungsspektrums von fluoreszierenden Partikeln in einem Durchflussbereich. Hierzu wird das Licht einer Weißlicht-Laserquelle spektral zerlegt und als spektrales Band in den Durchflussbereich eingestrahlt. US 2010/297759 A1 offenbart ebenfalls ein Verfahren zur Spektroskopie im Durchfluß.

Es ist eine Aufgabe der vorliegenden Erfindung, ein optisches System sowie ein Verfahren zur Spektroskopie, insbesondere zur Raman-Spektroskopie, anzugeben, mit denen auch einzelne bewegte Probenelemente spektroskopisch untersucht werden können, welche nicht auf den aus dem Stand der Technik bekannten komplexen Spektroskopie-Aufbauten beruhen, mit preisgünstigen Komponenten umgesetzt werden können und welche sich zum Aufbau besonders kleiner, kompakter und robuster Anordnungen eignen.

### Zusammenfassung der Erfindung

Diese Aufgaben werden erfindungsgemäß durch die unabhängigen Patentansprüche gelöst. Bevorzugte Ausgestaltungen der Erfindung sind in den Unteransprüchen enthalten.

Das erfindungsgemäße optische System umfasst eine multispektrale Anregungsquelle, dazu ausgebildet, nacheinander monochromatische Anregungsstrahlung bei mindestens zwei verschiedenen Anregungswellenlängen entlang einer gemeinsamen Strahlachse zu emittieren; einen länglich ausgebildeten Durchflussbereich mit einer Längsachse, dazu ausgebildet, einen Teilchenstrom entlang der Längsachse zu führen; einen Anregungsstrahlengang, dazu ausgebildet, die monochromatische Anregungsstrahlung an einer ersten Position und einer zweiten Position entlang der Längsachse des Durchflussbereichs in den Durchflussbereich einzustrahlen, wobei sich die erste Position und die zweite Position im Durchflussbereich (oder seitlich des Durchflussbereichs) befinden und die erste Position von der zweiten Position beabstandet ist; und eine Detektionseinrichtung, dazu ausgebildet, mindestens einen Teil einer von der ersten Position gestreuten Strahlung bei einer ersten Filterwellenlänge wellenlängenselektiv zu filtern und zu detektieren und mindestens einen Teil einer von der zweiten Position gestreuten Strahlung bei einer zweiten Filterwellenlänge wellenlängenselektiv zu filtern und zu detektieren. Das erfindungsgemäße optische System umfasst weiterhin ein Mittel zum Umschalten, dazu ausgebildet, zwischen mindestens zwei Anregungswellenlängen der Anregungsquelle in Abhängigkeit von der Position eines Probenelements entlang der Längsachse des Durchflussbereichs zu schalten.

Als multispektrale Anregungsquelle gilt dabei eine Strahlungsquelle, welche für spektroskopische Untersuchungen bei verschiedenen Anregungswellenlängen geeignet ist. Insbesondere zeichnet sich eine solche Anregungsquelle dadurch aus, dass dabei die verschiedenen Anregungswellenlängen im Wesentlichen als monochromatische Anregungsstrahlung emittiert werden. Bevorzugt kann zwischen den einzelnen Anregungswellenlängen der Anregungsquelle umgeschaltet werden. Bei der multispektralen Anregungsquelle kann es sich beispielsweise um eine entsprechend eingerichtete Diodenlaser-basierte Lichtquelle, eine Laserdiode oder ein komplexes Lasersystem handeln. Kennzeichnend ist, dass die multispektrale Anregungsquelle die verschiedenen Anregungswellenlängen entlang einer gemeinsamen Strahlachse emittiert.

Unter Anregungsstrahlung wird insbesondere eine monochromatische elektromagnetische Strahlung geringer spektraler Breite bei einer bestimmten Zentralwellenlänge (vorzugsweise im sichtbaren (VIS), ultravioletten (UV) oder infraroten (IR) Spektralbereich) als Anregungswellenlänge verstanden. Eine solche Anregungsstrahlung kann typischerweise von Diodenlasern bzw. Laserdioden im Einmoden-Betrieb emittiert werden. Besonders bevorzugt sind dabei Zentralwellenlängen um 785 nm mit spektralen Breiten (FWHM) von unter 1 nm. Die Erzeugung der verschiedenen Anregungswellenlängen kann beispielsweise durch die Verwendung mehrerer Laserdioden bei unterschiedlichen Emissionswellenlängen als Anregungswellenlängen erfolgen. Weiterhin können die verschiedenen Anregungswellenlängen auch durch eine einzelne, in ihrer Emissionswellenlänge veränderbare Laserdiode bzw. einen entsprechend spektral durchstimmbaren Diodenlaser erzeugt werden. Dabei kann neben der sprunghaften Einstellung einzelner voneinander beabstandeten Wellenlängen (beispielsweise im Abstand von 1 nm, 2 nm oder 5 nm) auch eine kontinuierliche Abstimmung einzelner Anregungswellenlängen über einen bestimmten Anregungswellenlängenbereich (beispielsweise über 5 nm, 10 nm, 15 nm oder 20 nm) erfolgen.

Bei dem länglich ausgebildeten Durchflussbereich mit einer Längsachse kann es sich insbesondere um einen für eine konventionelle Durchflusszytometrie ausgebildeten Bereich handeln. Bevorzugt kann der Durchflussbereich einen Mikrokanal oder eine Durchflussküvette umfassen, welche dazu ausgebildet sind, mittels eines Transportstroms innerhalb eines Transportmediums einzelne Partikel bzw. Probenelemente durch einen spektroskopischen Wechselwirkungsbereich zu führen. Ein erfindungsgemäßer Durchflussbereich kann jedoch auch ohne das Vorhandensein einer solchen vorgegebenen Führung ausgebildet werden. Der Durchflussbereich kann beispielsweise auch durch einen freien Hüllstrom erzeugt werden, welcher dazu ausgebildet ist, einen Teilchenstrom entlang der Längsachse des durch ihn definierten Durchflussbereichs zu führen. Bei dem Hüllstrom kann es sich insbesondere um einen freien Luft- oder Flüssigkeitsstrom handeln. Ebenfalls möglich ist die Ausbildung eines Durchflussbereichs durch die Verwendung eines entsprechend gerichteten Energiestroms (z.B. optischer Transport mittels Strahlungsfeldgradienten), eines potentialgetriebenen Strömungstransports (z.B. Transport geladener Probenelemente durch ein elektrisches Feld) sowie sonstige gerichtete Transportprozesse, welche die Erzeugung eines entlang der Längsachse des Durchflussbereichs gerichteten Teilchenstroms ermöglichen. Ein im Durchflussbereich geführter Teilchenstrom kann dabei sowohl über die einzelnen Teilchen des Hüllstroms selbst, als auch über die durch den Hüllstrom transportierten Probenelemente definiert werden.

Als Durchflussbereich wird daher der Volumenbereich bezeichnet, innerhalb dessen ein gerichteter Transport von Probenelementen (bspw. über einen Transportstrom) entlang einer Längsachse erfolgen kann. Insbesondere handelt es sich hierbei um denjenigen Volumenbereich, innerhalb dessen entlang der Längsachse eine erfindungsgemäße Wechselwirkung der Anregungsstrahlung mit transportierten Probenelementen stattfinden kann (Wechselwirkungsbereich). Ein typisches Beispiel für einen sonstigen gerichteten Transportprozess von Probenelementen ist ein Transport von makroskopischen Probenkörpern mittels eines Fließbandes durch einen zur Wechselwirkung mit einer erfindungsgemäßen Anregungsstrahlung ausgebildeten Durchflussbereich.

Der Durchflussbereich ist bevorzugt zumindest abschnittsweise rohrförmig bzw. als zylindrischer Bereich ausgebildet. Weiterhin kann der Durchflussbereich sich verjüngende oder erweiternde Abschnitte mit umfassen. Die Längsachse des länglich ausgebildeten Durchflussbereichs kann geradlinig oder beliebig im Raum gekrümmt sein. Insbesondere kann die Längsachse kreisförmig, mäandrierend oder spiralförmig ausgebildet sein. Ein Beispiel für eine kreisförmig ausgebildete Längsachse eines länglich ausgebildeten Durchflussbereichs ist der Durchflussbereich eines in sich zirkulierenden Transportstroms bzw. ein Durchflussbereich, welcher eine kreisförmige Bewegung einzelner Partikel bzw. Probenelemente aufzeigt (z.B. Ringstrom geladener Teilchen, Probenelemente in einem rotierender Reaktor, Kreislauf liquider Medien).

Vorzugsweise bewegen sich der Transportstrom und/oder die einzelnen Partikel bzw. Probenelemente mit einer gemeinsamen Geschwindigkeit durch den erfindungsgemäßen Durchflussbereich. Die gemeinsame Geschwindigkeit kann zeitlich variabel sein. Besonders bevorzugt ist, dass die lokale Geschwindigkeit des Transportstroms und/oder der einzelnen Partikel bzw. der Probenelemente von der Position entlang der Längsachse des Durchflussbereichs abhängig ist. Insbesondere kann es sich hierbei um eine beschleunigte oder eine sonstige zeitlich und örtlich (d.h. entlang der Längsachse) veränderliche Bewegung (z.B. verlangsamte oder pulsierende Bewegung) handeln. Vorzugsweise ist die Geschwindigkeit der einzelnen Partikel bzw. Probenelemente derart eingerichtet, dass eine Wechselwirkungszeit der Partikel bzw. Probenelemente mit der Anregungsstrahlung an den einzelnen Positionen kleiner als 100 ms, bevorzugter kleiner als 10 ms, bevorzugter kleiner als 1 ms und noch bevorzugter kleiner als 0,1 ms ist. Die Wechselwirkungszeit ergibt sich dabei durch die effektive Dauer der Wechselwirkung zwischen den Probenelementen und der Anregungsstrahlung an den einzelnen Positionen. Diese ist im Allgemeinen abhängig vom Volumen der Probenelemente, der effektiven räumlichen Ausdehnung der Anregungsstrahlung an den einzelnen Positionen sowie von der effektiven Geschwindigkeit innerhalb der effektiven räumlichen Ausdehnung der Anregungsstrahlung an den einzelnen Positionen.

Die Trajektorien der entlang der Längsachse des länglich ausgebildeten Durchflussbereichs durch den spektroskopischen Wechselwirkungsbereich geführten Partikel bzw. Probenelemente können parallel zu dieser Längsachse liegen. Ein Transport entlang der Längsachse, d.h. ein im Wesentlichen gerichteter Transport in Richtung der Längsachse, liegt jedoch auch dann vor, wenn sich einzelne Partikel bzw. Probenelemente lediglich im zeitlichen Mittel entlang der Längsachse des länglich ausgebildeten Durchflussbereichs bewegen. Insbesondere können die Probenelemente beim Transport entlang der Längsachse des Durchflussbereichs auch eine quer zur Längsachse gerichtete zusätzliche Zitterbewegung (z.B. durch Turbolenzstörungen im Hüllstrom oder durch die Brownsche Bewegung) ausführen.

Bei dem Anregungsstrahlengang handelt es sich um einen Teil des erfindungsgemäßen optischen Systems, durch den monochromatische Anregungsstrahlung der Anregungsquelle in den Durchflussbereich eingestrahlt wird. Befindet sich insbesondere ein Probenelement innerhalb des Durchflussbereichs, so kann eine Wechselwirkung mit dem Probenelement erfolgen. Die Anregungsstrahlung wird dabei vorzugsweise mehrfach an verschiedenen Positionen entlang der Längsachse des Durchflussbereichs in den Durchflussbereich eingestrahlt. Insbesondere wird dabei an mindestens einer ersten Position und einer zweiten Position in den Durchflussbereich eingestrahlt, wobei sich die erste Position und die zweite Position im Durchflussbereich befinden und die erste Position von der zweiten Position beabstandet ist. Der Anregungsstrahlengang umfasst sämtliche optische Komponenten, die der Einstrahlung der Anregungsstrahlung in den Durchflussbereich, insbesondere einer Bestrahlung eines den Durchflussbereich durchfließenden Probenelements, dienen.

Die Detektionseinrichtung soll zumindest einen Teil der innerhalb des Durchflussbereichs gestreuten Anregungsstrahlung, insbesondere die bei Bestrahlung eines den Durchflussbereich durchfließenden Probenelements von dem Probenelement gestreute Anregungsstrahlung, mindestens bei einer ersten Filterwellenlänge und einer zweiten Filterwellenlänge wellenlängenselektiv filtern und detektieren. Insbesondere erfolgt eine Detektion und Filterung von an der ersten Position und an der zweiten Position entlang der Längsachse des Durchflussbereichs gestreuter Strahlung. Die Detektionseinrichtung umfasst sämtliche optischen Komponenten, die der Filterung und Detektion mindestens eines Teils der innerhalb des Durchflussbereichs gestreuten Anregungsstrahlung dienen.

Die Idee der vorliegenden Erfindung besteht darin, dass ein gerichteter Teilchen- bzw. Transportstrom durch eine im Wesentlichen eindimensionale Ausrichtung entlang der Längsachse eines Durchflussbereichs eine mehrfache Wechselwirkung von Anregungsstrahlung mit dem Durchflussbereich ermöglicht und dadurch auch bei sich bewegenden Probenelementen eine vereinfachte Möglichkeit zu mehrfachen Untersuchungen besteht. Insbesondere kann bei Einstrahlung einer monochromatischen Anregungsstrahlung einer festen Anregungswellenlänge an mehr als einer Position die effektive Mess- und Beobachtungszeit verlängert werden. Die Aufnahme eines Raman-Spektrums wird dadurch ermöglicht, dass durch die Einstrahlung monochromatischer Anregungsstrahlung bei mehreren verschiedenen Anregungswellenlängen an unterschiedlichen Einstrahlpositionen durch eine anschließende Raman-selektive Filterung und Detektion der erzeugten Streustrahlung die erforderlichen Mess- und Integrationszeiten zur Aufnahme eines Spektrums erheblich reduziert werden können. Insbesondere wenn die Position eines sich bewegenden Probenelements mit einem Wechsel zwischen den unterschiedlichen Anregungswellenlängen der Anregungsquelle korreliert ist, kann dadurch eine sehr schnelle Aufnahme von Spektren erfolgen, ohne dass dabei komplexe Spektroskopie-Aufbauten benutzt werden müssen. Es kann mit preisgünstigen Komponenten gearbeitet werden und der Aufbau besonders kleiner, kompakter und robuster Anordnungen wird ermöglicht.

Vorzugsweise handelt es sich bei der Anregungsquelle um schmalbandige, spektral über einen breiten Bereich durchstimmbare und direkt frequenzmodulierte Laserdioden. Dabei bedeutet schmalbandig, dass es sich um Laserdioden handelt, deren emittierte Strahlung auf einen sehr engen spektralen Bereich begrenzt ist. Dies ist insbesondere dann der Fall, wenn es sich um Laserdioden im Einmoden-Betrieb handelt. Hierbei werden typischerweise Linienbreiten unterhalb von 1 nm (FWHM) erreicht. Besonders bevorzugte Linienbreiten (FWHM) liegen dabei bei unter 10 nm, unter 5 nm, unter 1 nm, und unter 0,1 nm. Je nach Wellenlängenbereich entspricht dies Frequenzbreiten im unteren THz-Bereich bis hinunter in den MHz-Bereich. Zur Anregung kommt bevorzugt Anregungsstrahlung bei Anregungswellenlängen im Bereich um 785 nm in Frage, weiterhin Anregungswellenlängen aus dem gesamten nahinfraroten Spektralbereich, dem sichtbaren Spektralbereich sowie dem ultravioletten, infraroten und dem ferninfraroten Spektralbereich.

Weiterhin ist bevorzugt, dass die Laserdioden spektral über einen breiten spektralen Bereich durchstimmbar sind. Dies hat den Vorteil, dass eine Anregungsquelle ein breites Spektrum an möglichen Anregungswellenlängen zur Verfügung stellen kann. Ebenfalls bevorzugt sind Laserdioden, bei denen unterschiedliche Moden angeregt werden können, so dass beispielsweise auch größere, zumindest diskret zu erreichende Wellenlängenbereich im Abstand mehrerer 10 nm erreicht werden können. Weiterhin bevorzugt sind direkt frequenzmodulierte Laserdioden, bei denen eine Wellenlängenänderung mittels intrinsischer Diodenparameter, beispielsweise über eine Temperatur oder einen Strom, eingestellt werden kann. Vorzugsweise können sogenannte Zweiwellenlängen-Diodenlaser, beispielsweise ein Y-verzweigter Zweiwellenlängen-DBR-Diodenlaser (auch als Y-branch DBR-RW Diodenlaser bezeichnet) [Maiwald et al., "Dual-Wavelength Y-Branch Distributed Bragg Reflector Diode Laser at 785 Nanometers for Shifted Excitation Raman Difference Spectroscopy", Appl. Spectrosc. 69, 1144-1151 (2015)], eingesetzt werden. Weiterhin ist ebenfalls bevorzugt, dass es sich bei der Anregungsquelle um einen entsprechend schmalbandigen und spektral über einen breiten Bereich durchstimmbaren Diodenlaser handelt. Hierbei kann es sich beispielsweise um ein ECDL-System oder einen spektral durchstimmbaren diodengepumpten Festkörperlaser handeln. Weiterhin eigenen sich beispielsweise entsprechend durchstimmbare Farbstoff- oder Faserlaser bzw. die einzelnen "Zinken" (Spektrallinien) eines optischen Frequenzkamms.

Vorzugsweise handelt es sich bei den Filterelementen um schmalbandige passive Bandpass-Filter, wobei eine Filterwellenlänge durch die Zentralwellenlänge eines solchen Bandpasses bestimmt ist. Dies können insbesondere dichroitische Filter, Bragg-Filter oder Fabry-Pérot-Filter sein. Ebenfalls möglich ist die Verwendung eines diffraktiven Gitters, eines Etalons oder eines Mach-Zehnder-Interferometers. Als wellenlängenselektiv wird hierbei insbesondere eine Filterung verstanden, bei der die Filterwellenlänge vom Filterelement mit einer maximalen Intensität transmittiert wird und die an die Filterwellenlänge angrenzenden Spektralbereiche unterdrückt bzw. geblockt werden. Als Filterwellenlänge wird dabei die Zentralwellenlänge des Durchlassbereichs (auch als Transmissionsbereich oder Pass-Band bezeichnet) des Filterelements bezeichnet. Bei symmetrischen Bandpässen ergibt sich dieser aus der spektralen Position der Bandpassmitte. Passiv bedeutet, dass zur Aufnahme eines Raman-Spektrums keine aktive Veränderung der Filtereigenschaften des Filterelements erfolgt, insbesondere jedoch, dass die jeweiligen Filterwellenlängen eines Filterelements zeitinvariant sind. Schmalbandig bedeutet, dass sich die spektrale Breite des Bandpasses auf einen eingeschränkten spektralen Bereich bezieht. Besonders bevorzugte Passbandbreiten (FWHM) liegen hier bei unter 10 nm, unter 5 nm, unter 1 nm, und unter 0,1 nm. Je nach Wellenlängenbereich entspricht dies Frequenzbreiten im unteren THz-Bereich bis hinunter in den MHz-Bereich. Unter einem schmalbandig transmittierenden Bandpass-Filter ist somit ein Filterelement zu verstehen, das im Wesentlichen bei der jeweiligen Filterwellenlänge (Zentralwellenlänge des Pass-Bandes) eine hohe Transmission für einfallende Strahlung mit identischer Wellenlänge aufweist, für Strahlung in einem direkt an die jeweilige Filterwellenlänge angrenzenden Bereich jedoch eine Transmission unterdrückt. Dabei ist "direkt" über die Filterbandbreite des jeweiligen Pass-Bandes definiert.

Vorzugsweise unterscheiden sich die transmittierten Filterwellenlängen der einzelnen Filterelemente sowohl untereinander als auch jeweils von den einzelnen Anregungswellenlängen der Anregungsstrahlung. Dies bedeutet, dass in der Detektionseinrichtung vorzugsweise inelastisch gestreute Anregungsstrahlung detektiert werden kann, da sich die durch die einzelnen Filterelemente transmittierten Filterwellenlängen von den einzelnen Anregungswellenlängen der Anregungsstrahlung unterscheiden.

Zur Aufnahme eines (diskreten) Raman-Spektrums (d.h. des spektraler Verlaufs von Raman-Signalen) ist es besonders bevorzugt, wenn der spektrale Abstand zwischen mindestens einer Anregungswellenlänge der Anregungsquelle und einer Filterwellenlänge eines Filterelements einer Raman-Verschiebung der von einem Probenelement gestreuten Anregungsstrahlung entspricht. Bevorzugt werden hierfür die transmittierten Filterwellenlängen der einzelnen Filterelemente jeweils von einem individuell zuordenbaren Detektor detektiert und mindestens eine erste Intensität und eine zweite Intensität für jede Anregungswellenlänge bestimmt. Bei einem individuell zuordenbaren Detektor kann es sich beispielsweise auch um einen individuell zugewiesenen Detektionsbereiche eines Zeilendetektors oder um einen Einzel- bzw. Einkanaldetektor handeln, dessen Detektionssignal eindeutig einer transmittierten Filterwellenlänge der einzelnen Filterelemente zugeordnet werden kann. Eine solche Zuordnung kann auch über eine zeitliche Trennung der Detektionssignale erfolgen. Die von Detektionseinrichtung bestimmten Intensitäten können durch ein geeignetes Mittel zur Bestimmung eines Raman-Spektrums derart ausgewertet werden, dass aus mindestens zwei bestimmten Intensitäten ein Raman-Spektrum bestimmt wird. Die Anzahl der bei der spektralen Auswertung genutzten Anregungswellenlängen gibt dabei die Dichte der auflösbaren (diskreten) Spektrallinien wieder.

Vorzugsweise handelt es sich bei den eingesetzten Detektoren um Einkanaldetektoren. Diese können sowohl als einzelne Einkanaldetektoren oder als entsprechend Einkanaldetektoren individuell auslesbare Mehrkanaldetektoren ausgeführt sein. Dies hat den Vorteil, dass hierbei besonders preisgünstige, kompakte und robuste DetektorEinrichtungen eingesetzt werden können. Die Verwendung einer hochauflösenden, besonders rauscharmen und empfindlichen CCD-Kamera ist nicht erforderlich. Werden Mehrkanaldetektoren über einzelne Kanäle als individuelle Einkanaldetektoren betrieben, so können auch mehrere Kanäle zu je einem Einkanaldetektor zusammengefasst werden. Ein unabhängiges Auslesen der einzelnen Kanalbündel sollte möglich sein.

Vorzugsweise ist der Anregungsstrahlengang dazu ausgebildet, mindestens an einer ersten Position mit der Anregungsstrahlung bei einer ersten Anregungswellenlänge in den Durchflussbereich einzustrahlen und mindestens an einer zweiten Position mit der Anregungsstrahlung bei einer zweiten Anregungswellenlänge in den Durchflussbereich einzustrahlen. Diese Ausführungsform der Erfindung entspricht einer Anordnung, bei der nacheinander Anregungsstrahlung der Anregungsquelle bei unterschiedlichen Anregungswellenlängen an unterschiedlichen Positionen entlang des Durchflussbereiches in den Durchflussbereich eingestrahlt wird. In einer alternativen Ausführungsform der Erfindung kann auch Anregungsstrahlung der Anregungsquelle einer ersten Anregungswellenlänge an mindestens zwei unterschiedlichen Positionen entlang des Durchflussbereiches in den Durchflussbereich eingestrahlt werden und an mindestens einer weiteren Position, die sich von den ersten beiden Positionen unterscheidet, Anregungsstrahlung der Anregungsquelle einer zweiten Anregungswellenlänge in den Durchflussbereich eingestrahlt werden. Eine solche Anordnung kann beispielsweise dazu genutzt werden, ein an einer Position bei einer ersten Anregungswellenlänge bestimmtes Messergebnis zu bestätigen oder die zur Verfügung stehende Messdauer für eine Messung bei einer Anregungswellenlänge zu erhöhen. Weiterhin kann eine solche Anordnung für SERDS (Shifted Excitation Raman Difference Spectroscopy) genutzt werden. Die Bestimmung eines Differenzspektrums erlaubt es, im Gegensatz zur bloßen Auswertung von aufgenommen Einzelspektren, genauere Rückschlüsse über eine Raman-Probe zu ziehen. Insbesondere lassen sich hierbei Einflüsse des Messhintergrundes effektiv herausfiltern. Da erfindungsgemäß jedoch eine Bestimmung einzelner Raman-Spektren nicht mittels eines Spektrometers, sondern durch das Bestrahlen eines Probenelements mit Anregungsstrahlung verschiedener Anregungswellenlängen erfolgt, wird dieses Verfahren zur Unterscheidung auch als TERDS (Tunable Excitation Raman Difference Spectroscopy) bezeichnet.

Vorzugsweise umfasst das optische System eine Einsammeloptik, die dazu ausgebildet ist, eine im Wesentlichen von einer ersten Position gestreute Strahlung einzusammeln und eine im Wesentlichen von einer zweiten Position gestreute Strahlung einzusammeln und die eingesammelte Strahlung auf die Detektionseinrichtung zu leiten. Vorzugsweise kann die Einsammeloptik ein positionsveränderlich gelagertes Objektiv umfassen. Insbesondere kann die Einsammeloptik ein positionsveränderlich gelagertes Objektiv umfassen, welches dazu ausgebildet ist, sich entsprechend eines den Durchflussbereich entlang seiner Längsrichtung durchfließenden Teilchenstroms derart in seiner Position zu verändern, dass die Geschwindigkeit des Objektives im Wesentlichen mit der Strömungsgeschwindigkeit des fließenden Teilchenstroms korreliert oder zumindest daran angepasst ist. Bevorzugt wird ein Probenelement entlang der Längsachse des Durchflussbereichs durch den Durchflussbereich transportiert, wobei das positionsveränderlich gelagerte Objektiv seine Position der Position des Probenelements anpasst. In einer weiteren bevorzugten Ausgestaltung der Erfindung umfasst die erfindungsgemäße Einsammeloptik eine Zylinderlinse, deren Längsachse im Wesentlichen in Richtung der Längsachse des Durchflussbereichs ausgerichtet ist. Dadurch kann aus dem Durchflussbereich herausgestreute Strahlung entlang der gesamten Längsachse des Durchflussbereichs eingesammelt und auf die Detektionseinrichtung geleitet werden. In einer ebenfalls bevorzugten Ausgestaltung einer erfindungsgemäßen Einsammeloptik umfasst diese eine Vielzahl von Einzellinsen oder Einzelobjektiven, welche im Wesentlichen entlang der Richtung der Längsachse des Durchflussbereichs ausgerichtet sind. Dies erlaubt zumindest ein Einsammeln von aus dem Durchflussbereich herausgestreuter Strahlung entlang diskreter Positionen entlang der Längsachse des Durchflussbereichs. Besonders bevorzugt korrelieren die Positionen der einzelnen Einzellinsen oder Einzelobjektive mit den Einstrahlpositionen der Anregungsstrahlung entlang der Längsachse des Durchflussbereichs. Das erfindungsgemäße optische System kann auch eine Vielzahl verschiedener Einsammeloptiken (z.B. positionsveränderlich gelagertes Objektiv und Zylinderlinse entlang einzelner Abschnitte des Durchflussbereichs, oder Einsammelvorrichtungen für unterschiedliche Einsammelrichtungen) umfassen, wobei gleichartige Sammeloptiken zu einer gemeinsamen Sammeloptik zusammengefasst werden können.

Vorzugsweise umfasst das erfindungsgemäße optische System weiterhin ein Mittel zur Positionsbestimmung, welches dazu ausgebildet ist, die Position eines entlang der Längsachse des Durchflussbereichs strömenden Probenelements zu bestimmen. Bei dem Probenelement handelt es sich bevorzugt um eine einzelne Zelle oder einen Partikel, welche durch eine entsprechende Anregungsstrahlung zur Streuung und/oder Fluoreszenz angeregt werden kann. Insbesondere handelt es sich bei dem Probenelement bevorzugt um eine Probe, welche zu inelastischer Streuung angeregt werden kann. Vorzugsweise kann von dem Probenelement ein Raman-Spektrum bestimmt werden. Bei dem Mittel zur Positionsbestimmung kann es sich bevorzugt um ein Mittel zur optischen Positionsbestimmung handeln (z.B. über maschinelles Sehen).

Das erfindungsgemäße optische System umfasst weiterhin ein Mittel zum Umschalten, welches dazu ausgebildet ist, zwischen mindestens zwei Anregungswellenlängen der Anregungsquelle in Abhängigkeit von der Position eines Probenelements entlang der Längsachse des zylindrischen Durchflussbereichs zu schalten. Vorzugsweise erfolgt ein Umschalten zwischen einer ersten Anregungswellenlänge der Anregungsquelle zu einer zweiten Anregungswellenlänge der Anregungsquelle wenn sich das Probenelement im Bereich zwischen einer ersten Position und einer zweiten Position entlang der Längsachse des Durchflussbereichs befindet. Ebenfalls bevorzugt ist, dass ein Umschalten zwischen einzelnen Anregungswellenlängen der Anregungsquelle ausschließlich dann stattfindet, wenn sich das Probenelement im Bereich zwischen den einzelnen Positionen entlang der Längsachse des Durchflussbereichs befindet.

Vorzugsweise umfasst die Detektionseinrichtung des erfindungsgemäßen optischen Systems mindestens einen Strahlteiler, an dem die von der Einsammeloptik eingesammelte Strahlung in mindestens zwei Strahlengänge aufgeteilt wird, wobei in einem ersten Strahlengang eine wellenlängenselektive Filterung durch ein erstes Filterelement bei einer ersten Filterwellenlänge und in einem zweiten Strahlengang eine wellenlängenselektive Filterung durch ein zweites Filterelement bei einer zweiten Filterwellenlänge erfolgt. Die erfindungsgemäße Detektionseinrichtung kann weitere Strahlteiler zur Aufteilung der von der Einsammeloptik eingesammelten Strahlung in eine Vielzahl von unterschiedlichen Strahlengängen umfassen. Den einzelnen Strahlengängen der Detektionseinrichtung können verschiedene Filterelemente mit unterschiedlichen Filterwellenlängen zugeordnet werden. Jeder Strahlengang kann einen exklusiv für diesen Strahlengang vorbehaltenen Detektor umfassen.

Ein weiterer Aspekt dieser Erfindung betrifft ein Verfahren zur Spektroskopie, insbesondere zur Raman-Spektroskopie, an einzelnen Probenelementen unter Verwendung eines voranstehend beschriebenen erfindungsgemäßen optischen Systems zur Spektroskopie. Das Verfahren zur Spektroskopie umfasst einen Strömungstransport eines Probenelements entlang einer Längsachse eines länglich ausgebildeten Durchflussbereichs von einem ersten Ende des Durchflussbereichs zu einem zweiten Ende des Durchflussbereichs; ein Bestrahlen des Probenelements mit monochromatischer Anregungsstrahlung einer ersten Anregungswellenlänge einer Anregungsquelle an einer ersten Position entlang der Längsachse des Durchflussbereichs; ein Umschalten von der ersten Anregungswellenlänge der Anregungsquelle zu einer zweiten Anregungswellenlänge der Anregungsquelle wenn sich das Probenelement im Bereich zwischen der ersten Position und einer zweiten Position entlang der Längsachse des Durchflussbereichs befindet; ein Bestrahlen des Probenelements mit monochromatischer Anregungsstrahlung der zweiten Anregungswellenlänge der Anregungsquelle an einer zweiten Position entlang der Längsachse des Durchflussbereichs.

Bei den Probenelementen kann es sich insbesondere um Zellen, Moleküle oder sonstige Mikro- bzw. Nano-Partikel handeln. Weiterhin kann es sich bei den Probenelementen um zur Raman-Spektroskopie geeignete makroskopische Körper oder Objekte handeln. Die Probenelemente können einzeln (single mode) oder im Verbund (bulk mode) untersucht werden. Weiterhin können die Probenelemente homogen bzw. annähernd homogen (gleiche bzw. annähernd gleiche Probenelementdichte) entlang des Durchflussbereichs verteilt sein. Insbesondere können die einzelnen Probenelemente den Durchflussbereich auch vollständig ausfüllen. Erläuterungen zu den einzelnen Merkmalen des erfindungsgemäßen Verfahrens können den entsprechenden Beschreibungen des erfindungsgemäßen optischen Systems entnommen werden. Alle zu den einzelnen Ausführungsformen des erfindungsgemäßen optischen Systems genannten Erläuterungen gelten entsprechend.

Vorzugsweise umfasst das erfindungsgemäße Verfahren weiterhin eine wellenlängenselektive Filterung der vom Probenelement gestreuten Anregungsstrahlung einer ersten Anregungswellenlänge der Anregungsquelle mittels eines ersten Filterelements und mindestens eines zweiten Filterelements, wobei sich eine transmittierte erste Filterwellenlänge des ersten Filterelements und eine transmittierte zweite Filterwellenlänge des zweiten Filterelements von der ersten Anregungswellenlänge unterscheidet; sowie eine wellenlängenselektive Filterung einer vom Probenelement gestreuten Anregungsstrahlung einer zweiten Anregungswellenlänge der Anregungsquelle mittels eines ersten Filterelements und mindestens eines zweiten Filterelements, wobei sich eine transmittierte erste Filterwellenlänge des ersten Filterelements und eine transmittierte zweite Filterwellenlänge des zweiten Filterelements von der zweiten Anregungswellenlänge unterscheidet. Vorzugsweise wird bei dem erfindungsgemäßen Verfahren die Position eines von der Einsammeloptik umfassten positionsveränderlich gelagerten Objektivs an die Position des entlang der Längsachse des Durchflussbereichs strömenden Probenelements angepasst.

### Kurzbeschreibung der Figuren

Die Erfindung wird nachfolgend in Ausführungsbeispielen anhand der zugehörigen Zeichnungen erläutert. Es zeigen:
- Figuren 1A-1C: schematische Darstellungen einer ersten Ausführungsform eines erfindungsgemäßen optischen Systems zur Spektroskopie in Seitenansicht;
- Figur 2: eine schematische Darstellung einer erweiterten Variante der in den Figuren 1A-1C dargestellten Ausführungsform eines erfindungsgemäßen optischen Systems zur Spektroskopie in Seitenansicht;
- Figuren 3A-3C: schematische Darstellungen einer ersten Ausführungsform eines erfindungsgemäßen optischen Systems zur Spektroskopie in Seitenansicht;
- Figur 4: eine schematische Darstellung einer erweiterten Variante der in den Figuren 3A-3C dargestellten Ausführungsform eines erfindungsgemäßen optischen Systems zur Spektroskopie in Seitenansicht;
- Figur 5: eine schematische Darstellung einer Ausführungsform eines erfindungsgemäßen optischen Systems zur Spektroskopie entsprechend den Figuren 1A-1C oder 2 in Aufsicht;
- Figur 6: schematische Darstellung einer Ausführungsform eines erfindungsgemäßen optischen Systems zur Spektroskopie entsprechend den Figuren 3A-3C oder 4 in Aufsicht; und
- Figur 7: ein allgemeines Schema zur Aufnahme eines Raman-Spektrums bei Anwendung eines erfindungsgemäßen Verfahrens.

### Detaillierte Beschreibung der Erfindung

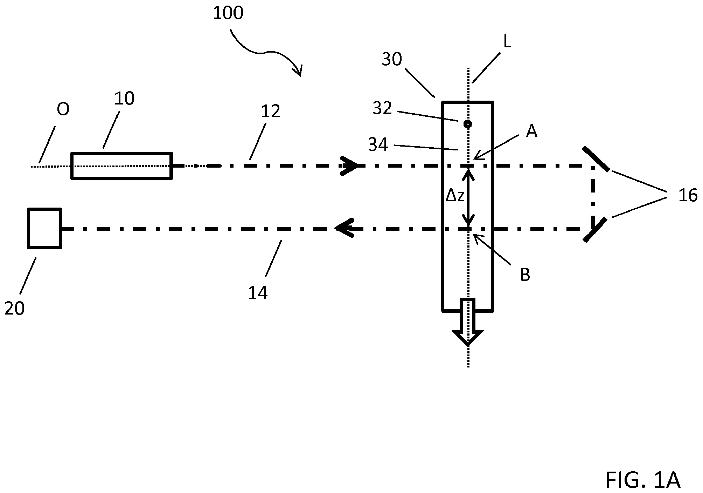

Figuren 1A bis 1C zeigen schematische Darstellungen einer ersten Ausführungsform eines erfindungsgemäßen optischen Systems 100 zur Spektroskopie in Seitenansicht. Eine multispektrale Anregungsquelle 10 kann monochromatische Anregungsstrahlung 12, 14 bei mindestens zwei verschiedenen Anregungswellenlängen λ₁, λ₂ entlang einer gemeinsamen Strahlachse O emittieren. Die von der Anregungsquelle 10 emittierte Anregungsstrahlung 12, 14 wird dabei mehrfach in einen länglich ausdehnten Durchflussbereich 30 mit einer Längsachse L eingestrahlt. Insbesondere wird bei dieser Ausführungsform die entlang der Strahlachse O in eine erste Richtung emittierte Anregungsstrahlung 12 nach einem ersten Hindurchtreten durch den Durchflussbereich 30 mittels entsprechend angeordneter Umlenkspiegel 16 oder einer sonstigen zur Strahlumlenkung ausgebildeten Umlenkvorrichtung derart umgelenkt, dass die danach in eine zweite Richtung propagierende Anregungsstrahlung 14 ebenfalls durch den Durchflussbereich 30 hindurchtreten kann. Der Anregungsstrahlengang ermöglicht somit ein mehrfaches Hindurchtreten der Anregungsstrahlung 12, 14 durch den Durchflussbereich 30. Dabei wird die monochromatische Anregungsstrahlung 12, 14 an einer ersten Position A und einer zweiten Position B in den Durchflussbereich 30 eingestrahlt, wobei sich die erste Position A und die zweite Position B im Durchflussbereich 30 befinden und die erste Position A von der zweiten Position B beabstandet Δz ist. Nach dem zweimaligen Hindurchtreten durch den Durchflussbereich 30 wird die in die zweite Richtung propagierende Anregungsstrahlung 14 an einem Beam Dump 20 geblockt. Die genaue Anordnung des Strahlenganges bzw. der einzelnen Komponenten des Strahlenganges kann hierbei jedoch im Prinzip frei gewählt werden, insbesondere können zusätzliche Umlenkvorrichtungen außerhalb des Durchflussbereiches 30 zur weiteren Umlenkung der Anregungsstrahlung vorgesehen sein.

Für die in den Figuren 1A bis 1C gezeigte Ausführungsform ist kennzeichnend, dass die Anregungsstrahlung 12, 14 aus unterschiedlichen Richtungen in den Durchflussbereich 30 eingestrahlt wird, wobei sich ein durchgehend einachsiger Strahlverlauf zwischen Anregungsquelle 10 und Beam Dump 20 ergibt. Insbesondere erfolgt bei dieser Ausführungsform ein Einstrahlen von Anregungsstrahlung 12,14 in den Durchflussbereich 30 aus zwei zueinander entgegengesetzten Richtungen. Im Allgemeinen können diese Richtungen auch verkippt angeordnet sein und entsprechende Winkel zueinander aufweisen. Parallelität der einzelnen Richtungen ist nicht erforderlich.

Bei dem Durchflussbereich 30 kann es sich beispielsweise um den Analysebereich einer Durchflussküvette handeln. Die seitliche Begrenzung des Durchflussbereichs 30 sowie die Längsachse L sind dabei durch die Formgebung des Küvettenkanals vorgegeben. Innerhalb des Durchflussbereichs 30 kann eine Strömung erzeugt werden, welche dazu geeignet ist, einen Teilchenstrom entlang der Längsachse L zu führen. Insbesondere kann es sich hierbei um ein fließendes Lösungs- bzw. Dispersionsmittel als Trägermedium für ein Probenelement 32 handeln. Ein Probenelement 32 kann bevorzugt mittels Strömungstransport entlang der Längsachse L des Durchflussbereichs 30 von einem ersten Ende des Durchflussbereichs 30 zu einem zweiten Ende des Durchflussbereichs 30 transportiert werden. Insbesondere kann es sich bei den Probenelementen 30 um einzelne Zellen handeln.

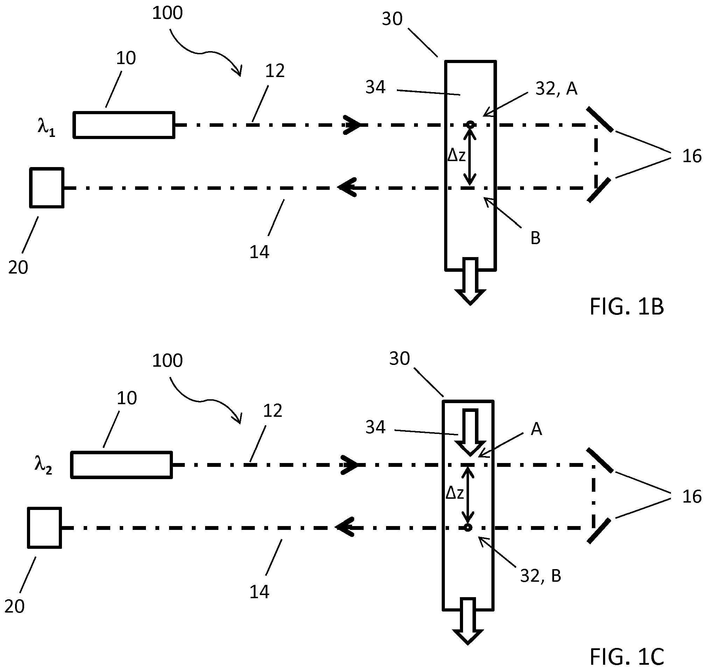

Figur 1A zeigt die schematische Darstellung zu einem Zeitpunkt, an dem ein entlang der Längsachse L des Durchflussbereichs 30 in Richtung auf Position A transportiertes Probenelement 32 sich oberhalb der Positionen A und B, an denen eine positionsabhängige Einstrahlung von Anregungsstrahlung 12, 14 in den Durchflussbereich 30 erfolgen kann, befindet. Figur 1B zeigt die gleiche schematische Darstellung zu einem späteren Zeitpunkt, an dem das Probenelement 32 sich durch den Strömungstransport an die Position A bewegt hat. Erfindungsgemäß kann hierbei an der Position A eine Bestrahlung des Probenelements 32 mit monochromatischer Anregungsstrahlung 12, 14 einer ersten Anregungswellenlänge λ₁ der Anregungsquelle 10 erfolgen. Figur 1C zeigt die schematische Darstellung zu einem noch späteren Zeitpunkt, an dem das Probenelement 32 von der Position A zur Position B weitertransportiert wurde. Erfindungsgemäß kann hierbei an der Position B eine Bestrahlung des Probenelements 32 mit monochromatischer Anregungsstrahlung 12, 14 einer zweiten Anregungswellenlänge λ₂ der Anregungsquelle 10 erfolgen. Ein Umschalten von der ersten Anregungswellenlänge λ₁ der Anregungsquelle 10 zu der zweiten Anregungswellenlänge λ₂ der Anregungsquelle 10 erfolgt dabei bevorzugt, wenn sich das Probenelement 32 im Bereich zwischen der ersten Position A und der zweiten Position B entlang der Längsachse L des Durchflussbereichs 30 befindet. Hierfür kann die Position eines strömenden Probenelements 32 entlang der Längsachse L des Durchflussbereichs 30 bestimmt werden.

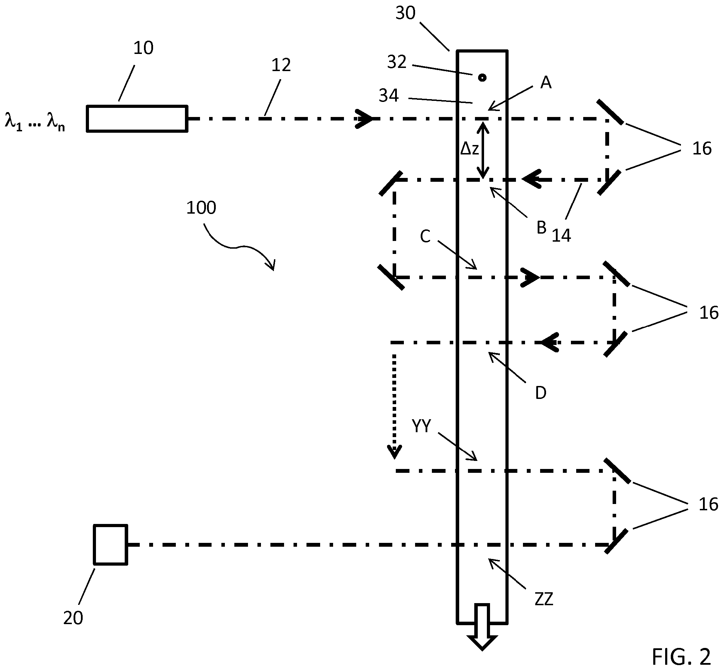

Figur 2 zeigt eine schematische Darstellung einer erweiterten Variante der in den Figuren 1A bis 1C dargestellten Ausführungsform eines erfindungsgemäßen optischen Systems 100 zur Spektroskopie in Seitenansicht. Die in Figur 2 verwendeten Bezugszeichen entsprechen den in den Figuren 1A bis 1C verwendeten Bezugszeichen. Die in den zugehörigen Figurenbeschreibungen genannten Ausführungen zu den einzelnen Bezugszeichen gelten entsprechend. Die Ausführungsform wurde dahingehend erweitert, dass durch Anordnung weiterer Umlenkspiegel 16 (oder sonstiger geeigneter Umlenkvorrichtungen) die Anregungsstrahlung 12, 14 an weiteren Positionen C, D, ... in den Durchflussbereich 30 eingestrahlt werden kann. Der Anregungsstrahlengang weist hierzu mehrere nacheinander abwechselnde Abschnitte mit in eine erste Richtung laufender Anregungsstrahlung 12 und in eine zweite Richtung laufender Anregungsstrahlung 14 auf. Die Anregungsstrahlung kann dadurch an einer Vielzahl von Positionen, d.h. einer ersten Position A, einer zweiten Position B, einer dritten Position C, usw., aus unterschiedlichen Richtungen kommend in den Durchflussbereich 30 eingestrahlt werden. Die Gesamtanzahl der Einstrahlpositionen kann entsprechend der Länge der Längsachse L des Durchflussbereichs 30 gewählt werden. Der Abstand Δz zwischen den einzelnen Einstrahlpositionen kann variieren. Auch können einzelne oder sämtliche Einstrahlrichtungen voneinander abweichen.

Entsprechend den Ausführungen zu den Figuren 1A bis 1C kann ein Umschalten zwischen den einzelnen Anregungswellenlängen λ₁...λₙ der Anregungsquelle 10 erfolgen, wenn sich das Probenelement 32 im Bereich zwischen zwei benachbarten Positionen entlang der Längsachse L des Durchflussbereichs 30 befindet. Hierbei ist bevorzugt, wenn die Anzahl der möglichen Anregungswellenlängen λ₁...λₙ der Anregungsquelle 10 der Gesamtzahl der Einstrahlpositionen entspricht. Auch bei einer gegenüber der Gesamtzahl von Einstrahlpositionen geringeren Anzahl von Anregungswellenlängen λ₁...λₙ der Anregungsquelle 10 kann beliebig zwischen diesen umgeschaltet werden. Insbesondere ist ein Umschalten zwischen einander benachbarten Einstrahlpositionen nicht erforderlich und eine bestimmte Anregungswellenlänge λ₁...λₙ der Anregungsquelle 10 kann an mehreren Einstrahlpositionen eingestrahlt werden. Somit kann insbesondere die effektive Zeit einer Wechselwirkung zwischen der Anregungsstrahlung 12, 14 einer bestimmten Anregungswellenlänge λ₁...λₙ und einem Probenelement 32 erhöht werden. Insbesondere kann eine Anregung durch eine Kaskade mehrfach alternierender Anregungsstrahlungen 12, 14 mit bestimmten Anregungswellenlängen λ₁...λₙ in beliebigen Permutationen entlang der Längsachse L des länglich ausgebildeten Durchflussbereichs 30 erfolgen. Eine solche mehrfache Anregung bei bestimmten Anregungswellenlänge λ₁...λₙ kann insbesondere für SERDS-Anwendungen genutzt werden. Weiterhin kann dadurch die Messgenauigkeit der jeweiligen Raman-Signale bei den einzelnen Anregungswellenlängen λ₁...λₙ durch eine entsprechende Mittelung verbessert werden.

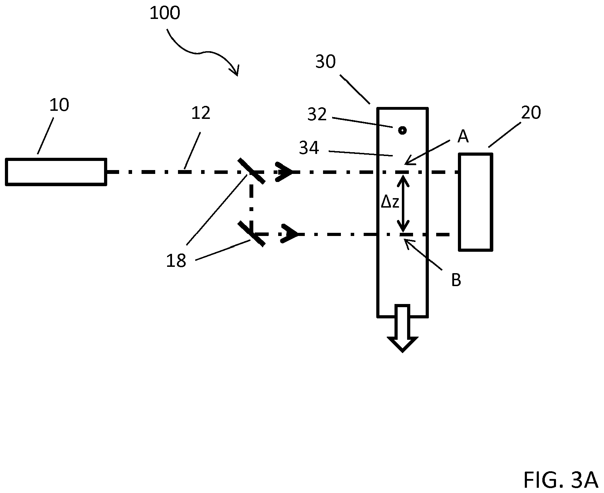

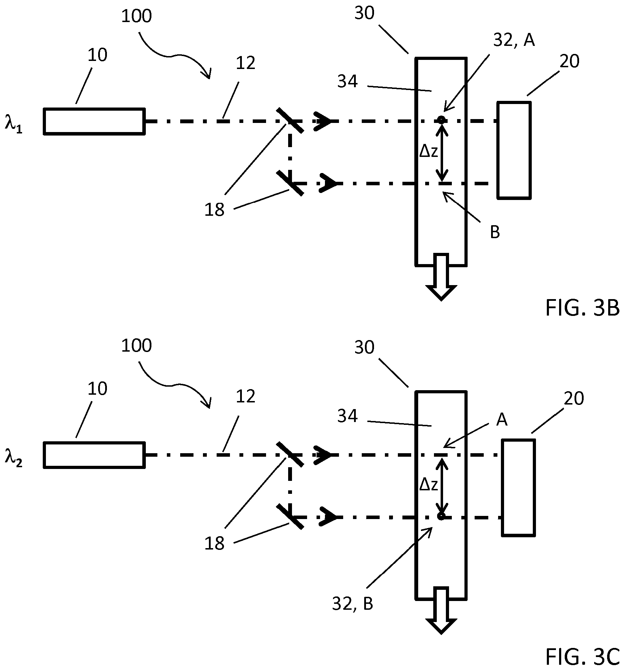

Figuren 3A bis 3C zeigen schematische Darstellungen einer zweiten Ausführungsform eines erfindungsgemäßen optischen Systems 100 zur Spektroskopie in Seitenansicht. Die in den Figuren 3A bis 3C verwendeten Bezugszeichen entsprechen weitestgehend den in den Figuren 1A bis 1C verwendeten Bezugszeichen. Die in den zugehörigen Figurenbeschreibungen genannten Ausführungen zu den einzelnen Bezugszeichen gelten entsprechend. Auch bei dieser Ausführungsvariante wird eine Anregungsstrahlung 12 einer Anregungsquelle 10 an einer ersten Position A und an einer zweiten Position B in einen Durchflussbereich 30 eingestrahlt. Im Gegensatz zu der in den Figuren 1A bis 1C gezeigten Anordnung handelt es sich bei dem dafür verwendeten Strahlengang jedoch nicht um einen durch Umlenkung ein- oder mehrfach gefalteten Einzelstrahl, sondern der Strahlengang wird hierbei durch den Einsatz von Strahlteilern 18 derart aufgespalten, so dass ein Einstrahlen in den Durchflussbereich 30 an der ersten Position A und an der zweiten Position B de facto gleichzeitig erfolgen kann. Weiterhin tritt die Anregungsstrahlung 12 bei einer solchen Ausführungsform nur einmalig mit dem Durchflussbereich 30 in Wechselwirkung. Dies ist insbesondere dann vorteilhaft, wenn der Durchflussbereich nur ein geringes Transmissionsvermögen (hohe Absorption oder Streuung) für die Anregungsstrahlung 12 aufweist, beispielsweise bei Verwendung eines trüben Mediums als Hüllstrom oder aufgrund einer hohen Probenelementdichte. Für die in den Figuren 3A bis 3C gezeigten Ausführungsformen ist kennzeichnend, dass die Anregungsstrahlung 12 jeweils aus einer gemeinsamen Richtung (allerdings voneinander beabstandet) in den Durchflussbereich 30 eingestrahlt wird, wobei der Strahlengang vorab zweifach (oder auch mehrfach) aufgeteilt wird. Die Anregungsstrahlung 12 wird durch die Strahlteiler aufgeteilt, wobei die einzelnen Teilstrahlen der Anregungsstrahlung 12 an einzelnen Einstrahlpositionen in den Durchflussbereich 30 eingestrahlt werden. Insbesondere erfolgt bei der hier dargestellten Ausführungsform ein Einstrahlen von Anregungsstrahlung 12 in den Durchflussbereich 30 aus zwei parallel zueinander verlaufenden Richtungen. Im Allgemeinen können jedoch auch bei dieser Ausführungsform die Richtungen zueinander verkippt sein und entsprechende Winkel zueinander aufweisen (beispielsweise zur Prozessbeobachtung innerhalb von Reaktoren). Parallelität der einzelnen Richtungen ist auch hierbei nicht erforderlich. Die Teilstrahlen des Anregungsstrahlenganges können nach Einstrahlung in den Durchflussbereich 30 durch einen einzelnen oder eine Vielzahl von Beam Dumps 20 blockiert werden.

Im Übrigen können die genannte erste und die genannte zweite Ausführungsform auch beliebig miteinander kombiniert werden, d.h. in einem entsprechenden Strahlgang können sowohl Elemente zur Umlenkung als auch zur Strahlteilung eingesetzt werden.

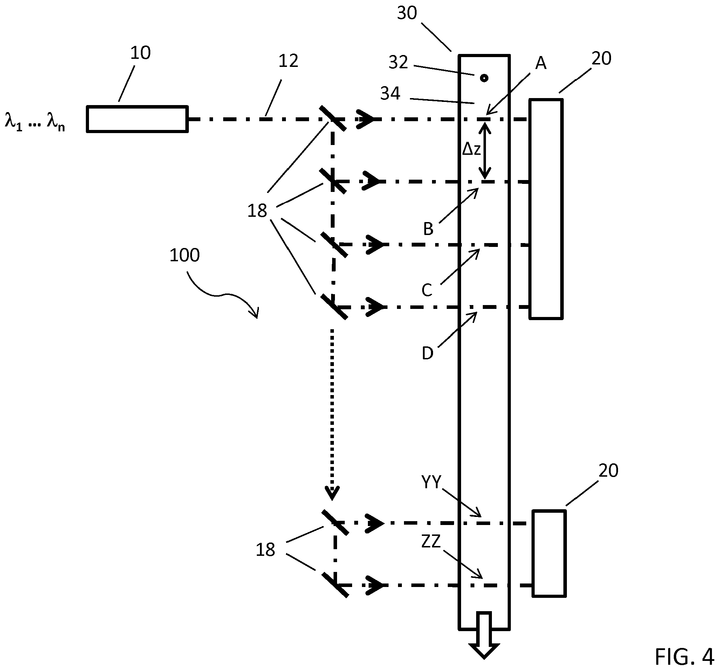

Figur 4 zeigt eine schematische Darstellung einer erweiterten Variante der in den Figuren 3A bis 3C dargestellten Ausführungsform eines erfindungsgemäßen optischen Systems 100 zur Spektroskopie in Seitenansicht. Die in Figur 4 verwendeten Bezugszeichen entsprechen den in den Figuren 3A bis 3C verwendeten Bezugszeichen. Die in den zugehörigen Figurenbeschreibungen genannten Ausführungen zu den einzelnen Bezugszeichen gelten entsprechend. Die Ausführungsform wurde analog zu Figur 2 dahingehend erweitert, dass durch Anordnung zusätzlicher Strahlteiler 18 die Anregungsstrahlung 12 an weiteren Positionen C, D, ... in den Durchflussbereich 30 eingestrahlt werden kann. Der Anregungsstrahlengang weist dabei mehrere im Wesentlichen identische parallele Abschnitte auf. Die Anregungsstrahlung 12 wird dadurch an einer Vielzahl von Positionen, d.h. einer ersten Position A, einer zweiten Position B, einer dritten Position C, usw., in den Durchflussbereich 30 eingestrahlt. Die Gesamtanzahl der Einstrahlpositionen kann dabei entsprechend der Länge der Längsachse L des Durchflussbereichs 30 gewählt werden. Der Abstand Δz zwischen den einzelnen Einstrahlpositionen kann variieren. Auch können einzelne oder sämtliche Einstrahlrichtungen voneinander abweichen.

Entsprechend den Ausführungen zu den Figuren 1A bis 1C kann auch hier ein Umschalten zwischen einzelnen Anregungswellenlängen λ₁...λₙ der Anregungsquelle 10 erfolgen, wenn sich das Probenelement 32 im Bereich zwischen zwei benachbarten Positionen entlang der Längsachse L des Durchflussbereichs 30 befindet. Hierbei ist es bevorzugt, wenn die Anzahl der möglichen Anregungswellenlängen λ₁...λₙ der Anregungsquelle 10 der Gesamtzahl der Einstrahlpositionen entspricht. Auch bei einer gegenüber der Gesamtzahl von Einstrahlpositionen geringeren Anzahl von Anregungswellenlängen λ₁...λₙ der Anregungsquelle 10 kann beliebig zwischen diesen umgeschaltet werden. Insbesondere ist ein Umschalten zwischen einander benachbarten Einstrahlpositionen nicht erforderlich und eine bestimmte Anregungswellenlänge λ₁...λₙ der Anregungsquelle 10 kann an mehreren Einstrahlpositionen eingestrahlt werden. Somit kann insbesondere die effektive Zeit einer Wechselwirkung zwischen der Anregungsstrahlung 12 einer bestimmten Anregungswellenlänge λ₁...λₙ und einem Probenelement 32 erhöht werden.

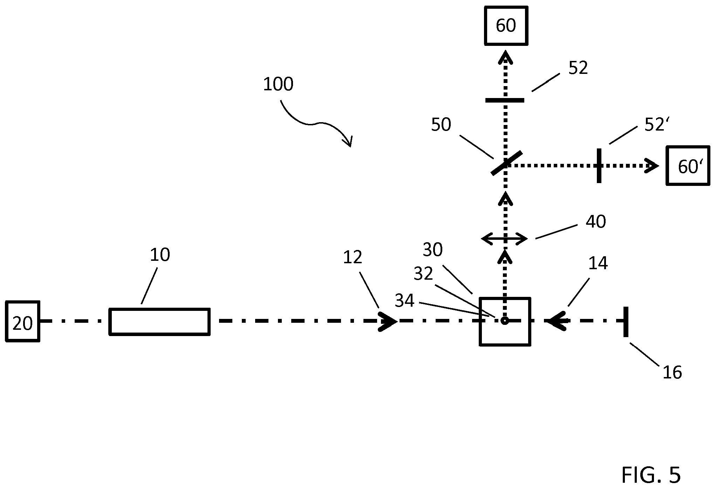

Figur 5 zeigt eine schematische Darstellung einer Ausführungsform eines erfindungsgemäßen optischen Systems 100 zur Spektroskopie entsprechend den Figuren 1A bis 1C oder 2 in Aufsicht. Die in Figur 5 verwendeten Bezugszeichen entsprechen weitestgehend den in den Figuren 1A bis 1C verwendeten Bezugszeichen. Die in den zugehörigen Figurenbeschreibungen genannten Ausführungen zu den einzelnen Bezugszeichen gelten entsprechend. Die an den verschiedenen Einstrahlpositionen gestreute Anregungsstrahlung 12, 14 wird durch eine Einsammeloptik 40 eingesammelt und einer Detektionseinrichtung 50, 52, 52', 60, 60' zugeführt. Die Aufgabe der Detektionseinrichtung 50, 52, 52', 60, 60' ist es, mindestens einen Teil von an den unterschiedlichen Einstrahlpositionen gestreuter Strahlung bei zumindest einer ersten Filterwellenlänge f₁ und einer zweiten Filterwellenlänge f₂ wellenlängenselektiv zu filtern und zu detektieren. Insbesondere kann die Detektionseinrichtung dabei mindestens einen Strahlteiler 50 umfassen, an dem die von der Einsammeloptik 40 eingesammelte Strahlung in mindestens zwei Strahlengänge aufgeteilt wird, wobei in einem ersten Strahlengang eine wellenlängenselektive Filterung durch ein erstes Filterelement 52 bei einer ersten Filterwellenlänge f₁ und in einem zweiten Strahlengang eine wellenlängenselektive Filterung durch ein zweites Filterelement 52' bei einer zweiten Filterwellenlänge f₂ erfolgt. Die bei der ersten Filterwellenlänge f₁ durch das erste Filterelement 52 transmittierte Strahlung wird anschließend durch einen ersten Detektor 60 detektiert, während die bei der zweiten Filterwellenlänge f₂ durch das zweite Filterelement 52' transmittierte Strahlung durch einen zweiten Detektor 60' detektiert wird.

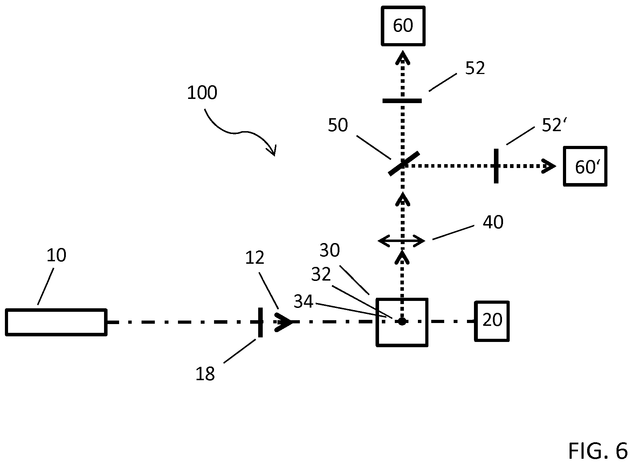

Figur 6 zeigt eine schematische Darstellung einer Ausführungsform eines erfindungsgemäßen optischen Systems 100 zur Spektroskopie entsprechend den Figuren 3A bis 3C oder 4 in Aufsicht. Die in Figur 6 verwendeten Bezugszeichen entsprechen weitestgehend den in Figur 5 verwendeten Bezugszeichen. Die in den zugehörigen Figurenbeschreibungen genannten Ausführungen zu den einzelnen Bezugszeichen gelten entsprechend. Abweichungen ergeben sich lediglich in Bezug zur gewählten Ausführungsform des Anregungsstrahlengangs. Dieser entspricht der in den Figuren 3A bis 3C oder 4 gezeigten Ausführungsform und weist anstelle einer Umlenkeinrichtung (Umlenkspiegel 16) zur Faltung des Anregungsstrahlenganges mindestens einen Strahlteiler 18 auf. Des Weiteren wird durch den veränderten Anregungsstrahlengang auch die Lage des Beam Dump 20 beeinflusst.

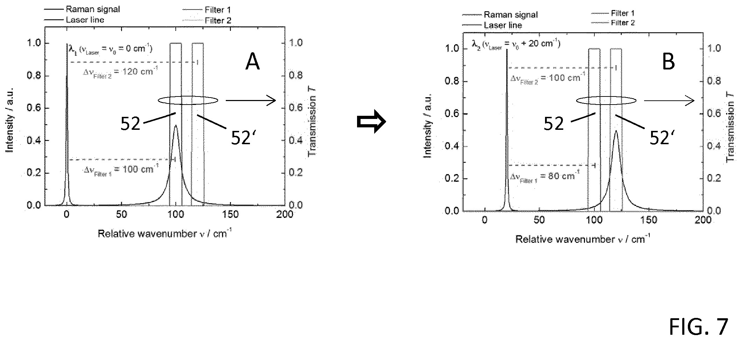

Figur 7 zeigt ein allgemeines Schema zur Aufnahme eines Raman-Spektrums bei Anwendung eines erfindungsgemäßen Verfahrens. Durch wellenlängenselektive Filterung und Detektion einer von einem Probenelement 32 gestreuten Anregungsstrahlung 12, 14 einer ersten Anregungswellenlänge λ₁ einer Anregungsquelle 10 mittels eines ersten Filterelements 52 und mindestens eines zweiten Filterelements 52', wobei sich eine transmittierte erste Filterwellenlänge f₁ des ersten Filterelements 52 und eine transmittierte zweite Filterwellenlänge f₂ des zweiten Filterelements 52' von der ersten Anregungswellenlänge λ₁ unterscheidet und eine wellenlängenselektive Filterung und Detektion der vom Probenelement 32 gestreuten Anregungsstrahlung 12, 14 einer zweiten Anregungswellenlänge λ₂ der Anregungsquelle 10 mittels eines ersten Filterelements 52 und mindestens eines zweiten Filterelements 52', wobei sich eine transmittierte erste Filterwellenlänge f₁ des ersten Filterelements 52 und eine transmittierte zweite Filterwellenlänge f₂ des zweiten Filterelements 52' von der zweiten Anregungswellenlänge λ₂ unterscheidet, lässt sich unter der Voraussetzung, dass der spektrale Abstand zwischen mindestens einer Anregungswellenlänge λ₁, λ₂ der Anregungsquelle 10 und einer Filterwellenlänge f₁, f₂ eines Filterelements 52, 52' genau einer Raman-Verschiebung der von dem Probenelement 32 gestreuten Anregungsstrahlung 12, 14 entspricht, ein diskretes Raman-Spektrum des Probenelements 32 bestimmen.

In den Diagrammen A und B sind als Abszisse jeweils die relative Wellenzahl, d.h. die Wellenzahldifferenz zur Wellenzahl einer bestimmten Bezugswelle in cm⁻¹, aufgetragen. Als Bezugswelle ist hierbei eine Welle einer ersten Anregungswellenlänge der Anregungsquelle gewählt. Als Ordinate ist die Intensität der Strahlung eingezeichnet. Der spektrale Verlauf der Intensität der Anregungsstrahlung (Profilverlauf) bei der ersten Anregungswellenlänge ist in Diagramm A entsprechend um die relative Wellenzahl 0 cm⁻¹ dargestellt. Weiterhin dargestellt ist die Filtercharakteristik eines ersten Filterelements 52 und eines zweiten Filterelements 52'. Das erste Filterelement 52 weist bei einer ersten Filterwellenlänge, welche einen spektralen Abstand mit einer relativen Wellenzahl von 100 cm⁻¹ zur ersten Anregungswellenlänge aufweist, in einem etwa eine relative Wellenzahl von 10 cm⁻¹ umfassenden spektralen Bereich eine Transmission von 1.0 auf. Überall sonst im dargestellten Bereich blockiert das erste Filterelement 52 einfallende Strahlung vollständig. Das zweite Filterelement 52' zeigt eine identische Filtercharakteristik, jedoch bei einer zweiten Filterwellenlänge, welche einen spektralen Abstand mit einer relativen Wellenzahl von 120 cm⁻¹ zur ersten Anregungswellenlänge aufweist.

Wird entsprechend der Darstellung in Diagramm A Anregungsstrahlung der ersten Anregungswellenlänge durch ein bestimmtes Probenelement (beispielsweise an einer ersten Position eines erfindungsgemäßen optischen Aufbaus) inelastisch Raman-gestreut, so liegt eine der ersten Filterwellenlänge entsprechende Raman-Strahlung innerhalb des Durchlassbereichs des ersten Filterelements 52 und wird transmittiert. Ein hinter dem ersten Filterelement 52 angeordneter erster Detektor kann somit die Intensität der gestreuten Strahlung bei der ersten Filterwellenlänge bestimmen. Die spektrale Breite der Ramangestreuten Strahlung ist jedoch zu gering, um auch nach einer Filterung durch das zweite Filterelement 52' bei der zweiten Filterwellenlänge auch auf einem zweiten Detektor ein entsprechendes Intensitätssignal zu generieren. Somit kann bei der in Diagramm A gezeigten Konfiguration auf eine Raman-Linie bei einer relativen Wellenzahl von 100 cm⁻¹ geschlossen werden. Die Breite der entsprechenden Raman-Linie kann insbesondere aus der Linienbreite der Anregungsstrahlung, den einzelnen Filterbandbreiten der Filterelemente (bzw. deren jeweiliger Filtercharakteristik) sowie aus dem über die Detektoren bestimmten Intensitätsverhältnis abgeschätzt werden.

In Diagramms B ist der Fall gezeigt, dass Anregungsstrahlung einer zweiten Anregungswellenlänge, welche einen spektralen Abstand mit einer relativen Wellenzahl von 20 cm⁻¹ zur ersten Anregungswellenlänge λ₁ aufweist, durch das gleiche Probenelement (beispielsweise an einer zweiten Position eines erfindungsgemäßen optischen Aufbaus) ebenfalls inelastisch Raman-gestreut wird. Da in diesem Beispiel der spektrale Abstand zwischen den beiden Filterwellenlängen der beiden Filterelemente 52, 52' genau mit dem spektralen Abstand der beiden Anregungswellenlängen der Anregungsstrahlung übereinstimmt (relative Wellenzahldifferenz von 20 cm⁻¹), werden lediglich die über beide Detektoren bestimmten Intensitätswerte vertauscht. Hierdurch kann das nach Diagramm A vermutete Auftreten einer entsprechenden Raman-Linie bestätigt werden.

Durch das erfindungsgemäße Einstrahlen von Anregungsstrahlung mehrerer Anregungswellenlängen und eine entsprechende Filterung durch mehrerer Filterelemente bei unterschiedlichen transmittierten Filterwellenlängen kann die spektrale Auflösung und die Zuverlässigkeit von Untersuchungen weiter erhöht werden. Insbesondere können Probenelemente auf das Auftreten einer Vielzahl von Raman-Linien hin untersucht werden.

### Bezugszeichenliste

- 10: Anregungsquelle
- 12: Anregungsstrahlung (propagierend in eine erste Richtung)
- 14: Anregungsstrahlung (propagierend in eine zweite Richtung)
- 16: Umlenkspiegel
- 18: Strahlteiler
- 20: Beam Dump
- 30: Durchflussbereich
- 32: Probenelement
- 40: Einsammeloptik
- 50: Strahlteiler
- 52: erstes Filterelement (Filterwellenlänge λ_{F})
- 52': zweites Filterelement (Filterwellenlänge λ_{F}')
- 62: erster Detektor (Filterwellenlänge λ_{F})
- 62': zweiter Detektor (Filterwellenlänge λ_{F}')
- 100: Optisches System
- A: erste Position
- B: zweite Position
- C - ZZ: weitere Positionen
- λ₁: erste Anregungswellenlänge
- λ₂: zweite Anregungswellenlänge
- f₁: erste Filterwellenlänge
- f₂: zweite Filterwellenlänge
- I: erste Intensität (Anregungswellenlänge λ₁ oder λ₂, Filterwellenlänge f₁ oder f₂)
- I': zweite Intensität (Anregungswellenlänge λ₁ oder λ₂, Filterwellenlänge f₁ oder f₂)
- O: Strahlachse
- L: Längsachse
- Δz: Abstand

## Patentansprüche

1. Optisches System (100) umfassend:
- eine multispektrale Anregungsquelle (10), dazu ausgebildet, nacheinander monochromatische Anregungsstrahlung (12, 14) bei mindestens zwei verschiedenen Anregungswellenlängen (λ₁, λ₂) entlang einer gemeinsamen Strahlachse (O) zu emittieren;
- einen länglich ausgebildeten Durchflussbereich (30) mit einer Längsachse (L), dazu ausgebildet, einen Teilchenstrom entlang der Längsachse (L) zu führen;
- einen Anregungsstrahlengang, dazu ausgebildet, die monochromatische Anregungsstrahlung (12, 14) an einer ersten Position (A) und einer zweiten Position (B) entlang der Längsachse (L) des Durchflussbereichs (30) in den Durchflussbereich (30) einzustrahlen, wobei sich die erste Position (A) und die zweite Position (B) im Durchflussbereich (30) befinden und die erste Position (A) von der zweiten Position (B) beabstandet (Δz) ist; und
- eine Detektionseinrichtung (50, 52, 52', 60, 60'), dazu ausgebildet, mindestens einen Teil einer von der ersten Position (A) gestreuten Strahlung bei einer ersten Filterwellenlänge (f₁) wellenlängenselektiv zu filtern und zu detektieren und mindestens einen Teil einer von der zweiten Position (B) gestreuten Strahlung bei einer zweiten Filterwellenlänge (f₂) wellenlängenselektiv zu filtern und zu detektieren;
**dadurch gekennzeichnet, dass**
das optisches System (100) weiterhin ein Mittel zum Umschalten umfasst, dazu ausgebildet, zwischen mindestens zwei Anregungswellenlängen (λ₁, λ₂) der Anregungsquelle (10) in Abhängigkeit von der Position eines Probenelements (32) entlang der Längsachse (L) des Durchflussbereichs (30) zu schalten.

2. Optisches System (100) nach Anspruch 1, weiterhin umfassend eine Einsammeloptik (40), dazu ausgebildet, eine im Wesentlichen von der ersten Position (A) gestreute Strahlung einzusammeln und eine im Wesentlichen von der zweiten Position (B) gestreute Strahlung einzusammeln und die eingesammelte Strahlung auf die Detektionseinrichtung (50, 52, 52', 60, 60') zu leiten.

3. Optisches System (100) nach einem der vorhergehenden Ansprüche, wobei der Anregungsstrahlengang dazu ausgebildet ist, mindestens an der ersten Position (A) mit der Anregungsstrahlung (12, 14) bei einer ersten Anregungswellenlänge (λ₁) in den Durchflussbereich (30) einzustrahlen und mindestens an der zweiten Position (B) mit der Anregungsstrahlung (12, 14) bei einer zweiten Anregungswellenlänge (λ₂) in den Durchflussbereich (30) einzustrahlen.

4. Optisches System (100) nach einem der vorhergehenden Ansprüche, wobei sich die transmittierten Filterwellenlängen (f₁, f₂) der einzelnen Filterelemente (52, 52') sowohl untereinander als auch jeweils von den einzelnen Anregungswellenlängen (λ₁, λ₂) der Anregungsstrahlung (12, 14) unterscheiden.

5. Optisches System (100) nach einem der vorhergehenden Ansprüche, wobei eine bei den transmittierten Filterwellenlängen (f₁, f₂) der einzelnen Filterelemente (52, 52') transmittierte Strahlung jeweils von einem individuell zuordenbaren Detektor (62, 62') detektiert werden und mindestens eine erste Intensität (I) und eine zweite Intensität (I') für jede Anregungswellenlänge (λ₁, λ₂) bestimmt werden.

6. Optisches System (100) nach Anspruch 5, weiterhin umfassend ein Mittel zur Bestimmung eines Raman-Spektrums, dazu ausgebildet, aus mindestens zwei bestimmten Intensitäten (I, I') ein Raman-Spektrum zu bestimmen.

7. Optisches System (100) nach Anspruch 6, wobei der spektrale Abstand zwischen mindestens einer Anregungswellenlänge (λ₁, λ₂) der Anregungsquelle (10) und einer Filterwellenlänge (f₁, f₂) eines Filterelements (52, 52') einer Raman-Verschiebung der von einem Probenelement (32) gestreuten Anregungsstrahlung (12, 14) entspricht.

8. Optisches System (100) nach einem der vorhergehenden Ansprüche, wobei die Detektionseinrichtung mindestens einen Strahlteiler (50) umfasst, an dem die von der Einsammeloptik (40) eingesammelte Strahlung in mindestens zwei Strahlengänge aufgeteilt wird, wobei in einem ersten Strahlengang eine wellenlängenselektive Filterung durch ein erstes Filterelement (52) bei einer Filterwellenlänge (f₁) und in einem zweiten Strahlengang eine wellenlängenselektive Filterung durch ein zweites Filterelement (52') bei einer zweiten Filterwellenlänge (f₂) erfolgt.

9. Verfahren zur Spektroskopie unter Verwendung eines optischen Systems (100) nach einem der vorhergehenden Ansprüche, folgende Verfahrensschritten umfassend:
- Strömungstransport eines Probenelements (32) entlang einer Längsachse (L) des länglich ausgebildeten Durchflussbereichs (30) von einem ersten Ende des Durchflussbereichs (30) zu einem zweiten Ende des Durchflussbereichs (30);
- Bestrahlen des Probenelements (32) mit monochromatischer Anregungsstrahlung (12, 14) der ersten Anregungswellenlänge (λ₁) einer Anregungsquelle (10) an der ersten Position (A) entlang der Längsachse (L) des Durchflussbereichs (30);
- Umschalten von der ersten Anregungswellenlänge (λ₁) der Anregungsquelle (10) zu einer zweiten Anregungswellenlänge (λ₂) der Anregungsquelle (10), wenn sich das Probenelement (32) im Bereich zwischen der ersten Position (A) und der zweiten Position (B) entlang der Längsachse (L) des Durchflussbereichs (30) befindet;
- Bestrahlen des Probenelements (32) mit monochromatischer Anregungsstrahlung (12, 14) der zweiten Anregungswellenlänge (λ₂) der Anregungsquelle (10) an der zweiten Position (B) entlang der Längsachse (L) des Durchflussbereichs (30).

10. Verfahren nach Anspruch 9, weiterhin umfassend:
- wellenlängenselektive Filterung der vom Probenelement (32) gestreuten Anregungsstrahlung (12, 14) der ersten Anregungswellenlänge (λ₁) der Anregungsquelle (10) mittels eines ersten Filterelements (52) und mindestens eines zweiten Filterelements (52'), wobei sich eine erste transmittierte Filterwellenlänge (f₁) des ersten Filterelements (52) und eine zweite transmittierte Filterwellenlänge (f₂) des zweiten Filterelements (52') von der ersten Anregungswellenlänge (λ₁) unterscheidet;
- wellenlängenselektive Filterung der vom Probenelement (32) gestreuten Anregungsstrahlung (12, 14) der zweiten Anregungswellenlänge (λ₂) der Anregungsquelle (10) mittels des ersten Filterelements (52) und des mindestens einen zweiten Filterelements (52'), wobei sich eine erste transmittierte Filterwellenlänge (f₁) des ersten Filterelements (52) und eine zweite transmittierte Filterwellenlänge (f₂) des mindestens einen zweiten Filterelements (52') von der zweiten Anregungswellenlänge (λ₂) unterscheidet.

11. Verfahren nach einem der Ansprüche 9 und 10, wobei eine bei den transmittierten Filterwellenlängen (f₁, f₂) der einzelnen Filterelemente (52, 52') transmittierte Strahlung jeweils von einem individuell zugeordneten Detektor (62, 62') detektiert werden und mindestens eine erste Intensität (I) und eine zweite Intensität (I') für jede Anregungswellenlänge (λ₁, λ₂) bestimmt werden.

12. Verfahren nach Anspruch 11, wobei aus mindestens zwei bestimmten Intensitäten (I, I') ein Raman-Spektrum bestimmt wird.

13. Verfahren nach Anspruch 12, wobei der spektrale Abstand zwischen mindestens einer Anregungswellenlänge (λ₁, λ₂) der Anregungsquelle (10) und einer Filterwellenlänge (f₁, f₂) eines Filterelements (52, 52') einer Raman-Verschiebung der von einem Probenelement (32) gestreuten Anregungsstrahlung (12, 14) entspricht.

14. Verfahren nach einem der Ansprüche 9 bis 13, wobei die Position des entlang der Längsachse (L) des Durchflussbereichs (30) strömenden Probenelements (32) bestimmt wird.

## Claims

1. An optical system (100) comprising:
- a multispectral excitation source (10), designed to emit monochromatic excitation radiation (12, 14) with at least two different excitation wavelengths (λ₁, λ₂) one after the other along a common beam axis (O);
- an elongated flow range (30) having a longitudinal axis (L), designed to guide a particle flow along the longitudinal axis (L);
- an excitation beam path, designed to irradiate the monochromatic excitation radiation (12, 14) at a first position (A) and a second position (B) along the longitudinal axis (L) of the flow range (30) into the flow range (30), wherein the first position (A) and the second position (B) are located in the flow range (30) and the first position (A) is at a distance (Δz) from the second position (B); and
- a detection device (50, 52, 52', 60, 60'), designed to filter wavelength selectively and to detect at least one part of the radiation with a first filter wavelength (f₁) scattered by the first position (A) and to filter wavelength selectively and to detect at least one part of the radiation with a second filter wavelength (f₂) scattered by the second position (B);
**characterized in that**
the optical system (100) furthermore comprises a means for switching over, designed to switch between at least two excitation wavelengths (λ₁, λ₂) of the excitation source (10) as a function of the position of a sample element (32) along the longitudinal axis (L) of the flow range (30).

2. The optical system (100) according to Claim 1, furthermore comprising a collection optic (40), designed to collect radiation substantially scattered by the first position (A) and to collect radiation substantially scattered by the second position (B) and to conduct the collected radiation to the detection device (50, 52, 52', 60, 60').

3. The optical system (100) according to any one of the preceding claims, wherein the excitation beam path is designed to irradiate at least at the first position (A) with the excitation radiation (12, 14) with a first excitation wavelength (λ₁) into the flow range (30) and to irradiate at least at the second position (B) with the excitation radiation (12, 14) with a second excitation wavelength (λ₂) into the flow range (30).

4. The optical system (100) according to any one of the preceding claims, wherein the transmitted filter wavelengths (f₁, f₂) of the individual filter elements (52, 52') differ both from each other and also respectively from the individual excitation wavelengths (λ₁, λ₂) of the excitation radiation (12, 14).

5. The optical system (100) according to any one of the preceding claims, wherein radiation transmitted with the transmitted filter wavelengths (f₁, f₂) of the individual filter elements (52, 52') is respectively detected by a detector (62, 62') which can be individually assigned and at least one first intensity (I) and a second intensity (I') are determined for each excitation wavelength (λ₁, λ₂).

6. The optical system (100) according to Claim 5, furthermore comprising a means for determining a Raman spectrum, designed to determine a Raman spectrum from at least two determined intensities (I, I').

7. The optical system (100) according to Claim 6, wherein the spectral distance between at least one excitation wavelength (λ₁, λ₂) of the excitation source (10) and a filter wavelength (f₁, f₂) of a filter element (52, 52') corresponds to a Raman displacement of the excitation radiation (12, 14) scattered by a sample element (32).

8. The optical system (100) according to any one of the preceding claims, wherein the detection device comprises at least one beam splitter (50), at which the radiation collected by the collection optic (40) is split up into at least two beam paths, wherein a wavelength selective filtering is effected by a first filter element (52) with a filter wavelength (f₁) in a first beam path and a wavelength selective filtering is effected by a second filter element (52') with a second filter wavelength (f₂) in a second beam path.

9. A method for spectroscopy using an optical system (100) according to any one of the preceding claims, comprising the following method steps:
- flow transport of a sample element (32) along a longitudinal axis (L) of the elongated flow range (30) from a first end of the flow range (30) to a second end of the flow range (30);
- radiating the sample element (32) with monochromatic excitation radiation (12, 14) of the first excitation wavelength (λ1) of an excitation source (10) at the first position (A) along the longitudinal axis (L) of the flow range (30);
- switching over from the first excitation wavelength (λ₁) of the excitation source (10) to a second excitation wavelength (λ₂) of the excitation source (10), if the sample element (32) is located in the region between the first position (A) and the second position (B) along the longitudinal axis (L) of the flow range (30);
- radiating the sample element (32) with monochromatic excitation radiation (12, 14) of the second excitation wavelength (λ₂) of the excitation source (10) at the second position (B) along the longitudinal axis (L) of the flow range (30).

10. The method according to Claim 9, furthermore comprising:
- wavelength selective filtering of the excitation radiation (12, 14) of the first excitation wavelength (λ₁) of the excitation source (10) scattered by the sample element (32) by means of a first filter element (52) and at least one second filter element (52'), wherein a first transmitted filter wavelength (f₁) of the first filter element (52) and a second transmitted filter wavelength (f₂) of the second filter element (52') differ from the first excitation wavelength (λ₁);
- wavelength selective filtering of the excitation radiation (12, 14) of the second excitation wavelength (λ₂) of the excitation source (10) scattered by the sample element (32) by means of the first filter element (52) and the at least one second filter element (52'), wherein a first transmitted filter wavelength (f₁) of the first filter element (52) and a second transmitted filter wavelength (f₂) of the at least one second filter element (52') differ from the second excitation wavelength (λ₂).

11. The method according to any one of Claims 9 and 10, wherein the radiation transmitted with the transmitted filter wavelengths (f₁, f₂) of the individual filter elements (52, 52') is respectively detected by a detector (62, 62') which can be individually assigned and at least one first intensity (I) and a second intensity (I') are determined for each excitation wavelength (λ₁, λ₂).

12. The method according to Claim 11, wherein a Raman spectrum is determined from at least two determined intensities (I, I').

13. The method according to Claim 12, wherein the spectral distance between at least one excitation wavelength (λ₁, λ₂) of the excitation source (10) and a filter wavelength (f₁, f₂) of a filter element (52, 52') corresponds to a Raman displacement of the excitation radiation (12, 14) scattered by a sample element (32).

14. The method according to any one of Claims 9 to 13, wherein the position of the sample element (32) flowing along the longitudinal axis (L) of the flow range (30) is determined.

## Revendications

1. Système optique (100) comprenant :
- une source d'excitation (10) multispectrale, conçue pour émettre successivement un rayonnement excitateur (12, 14) monochromatique avec au moins deux longueurs d'onde d'excitation (λ₁, λ₂) différentes le long d'un axe de faisceau (O) commun ;
- une zone d'écoulement (30) réalisée allongée avec un axe longitudinal (L), conçue pour guider un courant corpusculaire le long de l'axe longitudinal (L) ;
- un chemin optique d'excitation, conçu pour irradier dans la zone d'écoulement (30) le rayonnement excitateur (12, 14) monochromatique en une première position (A) et une seconde position (B) le long de l'axe longitudinal (L) de la zone d'écoulement (30), la première position (A) et la seconde position (B) se trouvant dans la zone d'écoulement (30) et la première position (A) étant espacée (Δz) de la seconde position (B), et
- un dispositif de détection (50, 52, 52', 60, 60'), conçu pour filtrer et pour détecter au moins une partie d'un rayonnement diffusé depuis la première position (A) de manière sélective en longueur d'onde avec une première longueur d'onde de filtrage (f₁) et pour filtrer et pour détecter au moins une partie d'un rayonnement diffusé depuis la seconde position (B) de manière sélective en longueur d'onde avec une seconde longueur d'onde de filtrage (f2) ;
**caractérisé en ce que**
le système optique (100) comprend en outre un moyen de commutation, conçu pour commuter entre au moins deux longueurs d'onde d'excitation (λ₁, λ₂) de la source d'excitation (10) en fonction de la position d'un élément d'échantillon (32) le long de l'axe longitudinal (L) de la zone d'écoulement (30).

2. Système optique (100) selon la revendication 1, comprenant en outre une optique collectrice (40), conçue pour collecter un rayonnement diffusé sensiblement depuis la première position (A) et collecter un rayonnement diffusé sensiblement depuis la seconde position (B) et diriger le rayonnement collecté vers le dispositif de détection (50, 52, 52', 60, 60').

3. Système optique (100) selon l'une quelconque des revendications précédentes, dans lequel le chemin optique d'excitation est conçu pour irradier, au moins en la première position (A), dans la zone d'écoulement (30) avec le rayonnement excitateur (12, 14) à une première longueur d'onde d'excitation (λ₁) et irradier, au moins en la seconde position (B), dans la zone d'écoulement (30) avec le rayonnement excitateur (12, 14) à une seconde longueur d'onde d'excitation (λ₂).

4. Système optique (100) selon l'une quelconque des revendications précédentes, dans lequel les longueurs d'onde de filtrage (f₁, f₂) transmises des différents éléments de filtrage (52, 52') diffèrent aussi bien les unes des autres que respectivement des différentes longueurs d'onde d'excitation (λ₁, λ₂) du rayonnement excitateur (12, 14).

5. Système optique (100) selon l'une quelconque des revendications précédentes, dans lequel un rayonnement transmis avec les longueurs d'onde de filtrage (f₁, f₂) transmises des différents éléments de filtrage (52, 52') est respectivement détecté par un détecteur (62, 62') pouvant être attribué individuellement et au moins une première intensité (I) et une seconde intensité (I') sont déterminées pour chaque longueur d'onde d'excitation (λ₁, λ₂).

6. Système optique (100) selon la revendication 5, comprenant en outre un moyen pour déterminer un spectre Raman, conçu pour déterminer un spectre Raman à partir d'au moins deux intensités (I, I') déterminées.

7. Système optique (100) selon la revendication 6, dans lequel l'écart spectral entre au moins une longueur d'onde d'excitation (λ₁, λ₂) de la source d'excitation (10) et une longueur d'onde de filtrage (f₁, f₂) d'un élément de filtrage (52, 52') correspond à un déplacement Raman du rayonnement excitateur (12, 14) diffusé par un élément d'échantillon (32).

8. Système optique (100) selon l'une quelconque des revendications précédentes, dans lequel le dispositif de détection comprend au moins un séparateur de faisceau (50), au niveau duquel le rayonnement collecté par l'optique collectrice (40) est séparé en au moins deux chemins optiques, un premier filtrage sélectif en longueur d'onde étant effectué dans un premier chemin optique par un premier élément de filtrage (52) avec une longueur d'onde de filtrage (f₁) et un filtrage sélectif en longueur d'onde étant effectué dans un second chemin optique par un second élément de filtrage (52') avec une seconde longueur d'onde de filtrage (f₂).

9. Procédé de spectroscopie au moyen d'un système optique (100) selon l'une quelconque des revendications précédentes, comprenant les étapes de procédé suivantes :
- transport par écoulement d'un élément d'échantillon (32) le long d'un axe longitudinal (L) de la zone d'écoulement (30) réalisée allongée, d'une première extrémité de la zone d'écoulement (30) à une seconde extrémité de la zone d'écoulement (30) ;
- irradiation de l'élément d'échantillon (32) avec un rayonnement excitateur (12, 14) monochromatique à la première longueur d'onde d'excitation (λ₁) d'une source d'excitation (10) en la première position (A) le long de l'axe longitudinal (L) de la zone d'écoulement (30) ;
- commutation de la première longueur d'onde d'excitation (λ₁) de la source d'excitation (10) à une seconde longueur d'onde d'excitation (λ₂) de la source d'excitation (10) lorsque l'élément d'échantillon (32) se trouve dans la zone située entre la première position (A) et la seconde position (B) le long de l'axe longitudinal (L) de la zone d'écoulement (30) ;
- irradiation de l'élément d'échantillon (32) avec un rayonnement excitateur (12, 14) monochromatique à la seconde longueur d'onde d'excitation (λ₂) de la source d'excitation (10) en la seconde position (B) le long de l'axe longitudinal (L) de la zone d'écoulement (30).

10. Procédé selon la revendication 9, comprenant en outre :
- le filtrage sélectif en longueur d'onde du rayonnement excitateur (12, 14) diffusé par l'élément d'échantillon (32) à la première longueur d'onde d'excitation (λ₁) de la source d'excitation (10) au moyen d'un premier élément de filtrage (52) et d'au moins un second élément de filtrage (52'), une première longueur d'onde de filtrage (f₁) transmise du premier élément de filtrage (52) et une seconde longueur d'onde de filtrage (f₂) transmise du second élément de filtrage (52') étant différentes de la première longueur d'onde d'excitation (λ₁) ;
- le filtrage sélectif en longueur d'onde du rayonnement excitateur (12, 14) diffusé par l'élément d'échantillon (32) à la seconde longueur d'onde d'excitation (λ₂) de la source d'excitation (10) au moyen du premier élément de filtrage (52) et du au moins un second élément de filtrage (52'), une première longueur d'onde de filtrage (f₁) transmise du premier élément de filtrage (52) et une seconde longueur d'onde de filtrage (f₂) transmise du au moins un second élément de filtrage (52') étant différentes de la seconde longueur d'onde d'excitation (λ₂).

11. Procédé selon une des revendications 9 et 10, dans lequel un rayonnement transmis avec les longueurs d'onde de filtrage (f₁, f₂) transmises des différents éléments de filtrage (52, 52') est respectivement détecté par un détecteur (62, 62') attribué individuellement et au moins une première intensité (I) et une seconde intensité (I') sont déterminées pour chaque longueur d'onde d'excitation (λ₁, λ₂).

12. Procédé selon la revendication 11, dans lequel un spectre Raman est déterminé à partir d'au moins deux intensités (I, I') déterminées.

13. Procédé selon la revendication 12, dans lequel l'écart spectral entre au moins une longueur d'onde d'excitation (λ₁, λ₂) de la source d'excitation (10) et une longueur d'onde de filtrage (f₁, f₂) d'un élément de filtrage (52, 52') correspond à un déplacement Raman du rayonnement excitateur (12, 14) diffusé par un élément d'échantillon (32).

14. Procédé selon une des revendications 9 à 13, dans lequel la position de l'élément d'échantillon (32) s'écoulant le long de l'axe longitudinal (L) de la zone d'écoulement (30) est déterminée.
